# FASCICULE DE BREVET EUROPEEN

(11) **EP 0 531 203 B1**
(45) Date de publication et mention de la délivrance du brevet: **27.11.1996**
(21) Numéro de dépôt: 92402385.6
(22) Date de dépôt: 02.09.1992
(51) Int. Cl.: H04B 7/26, G01S 13/76

(54) **Procédé et dispositif pour la transmission d'information et la localisation de mobiles**
Verfahren und Anordnung zur Informationsübertragung und zur Lokalisierung beweglicher Objekte
Method and apparatus for transmitting information and locating mobiles

(30) Priorité: 05.09.1991 FR 9110967
(43) Date de publication de la demande: 10.03.1993
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Chevallier, Bernard Albert Jean, F-92370 Chaville (FR); Le Garrec, Guy, F-95110 Sannois (FR); Sebilet, Bruno Roger, F-92500 Rueil Malmaison (FR)

(56) Documents cités:
- DE-A- 2 603 524
- FR-A- 2 621 132
- US-A- 4 817 001
- US-A- 5 043 736
- L'ONDE ELECTRIQUE, vol. 66, no. 2, mars 1986, pages 89-102, Paris, FR; G. NARD: "Les principes de l'étalement du spectre appliqués à un nouveau système précis de radiopositionnement à moyenne et grande portée"
- PATENT ABSTRACTS OF JAPAN, vol. 8, no. 139 (E-253)(1576), 28 juin 1984; & JP-A-59 049 033

## Description

La présente invention concerne un procédé de transmission d'information à grand débit entre des mobiles et leur localisation. L'invention se rapporte également à un dispositif pour la mise en oeuvre de ce procédé.

Si aujourd'hui la transmission d'information à grand débit, notamment entre des mobiles, peut être aisément réalisée par les moyens classiques connus de l'homme de l'art, la localisation de ces mobiles entre eux pose, encore à ce jour, de sérieux problèmes. Il en est ainsi plus particulièrement en matière d'aéronefs où la localisation faible distance est effectuée à vue, ce qui n'est pas sans poser certains désagréments notamment lorsque la visibilité est dégradée.

Le brevet allemand DE 2.603.524 décrit un système de transmission d'information bidirectionnelle entre deux stations en déplacement relatif l'une par rapport à l'autre. L'éloignement réciproque momentané des deux stations est déterminé au moyen d'un dispositif de télémétrie installé dans la première station. Cependant ce système est exclusivement limité à deux stations et ne permet pas de localiser un nombre de mobiles supérieur à deux.

La présente invention à pour but de réaliser un système de transmission d'information qui puisse également assurer la localisation précise des mobiles constituant le système, le nombre de mobiles n'étant pas limité à deux.

Ce but est atteint du fait que, conformément à l'invention, il est procédé selon les étapes suivantes :
a) émission, d'un premier mobile vers les autres mobiles, d'un signal utile sous la forme d'une information à grand débit modulée et codée par un code d'étalement,
b) réception, par les mobiles autres que le premier mobile, de l'information à grand débit codée ainsi transmise et restitution, par corrélation avec le code d'étalement et démodulation, de l'information à grand débit initiale,
c) en réponse à cette émission du premier mobile, émission au rythme des phases successives d'une horloge système, par chacun des mobiles autres que le premier mobile, d'un signal de service sous la forme d'une information à faible débit modulée et codée par le code d'étalement,
d) réception, par les mobiles autres que le mobile émetteur selon l'étape c, de l'information à faible débit codée ainsi transmise et d'une part restitution, par corrélation avec le code d'étalement et démodulation, de l'information à faible débit initial et d'autre part détermination des distances séparant les différents mobiles par comparaison du retard de phase existant entre le code d'étalement associé à l'information à faible débit reçue et le code d'étalement émis, lesquelles distances représentant, pour le premier mobile, les trajets aller-retour entre lui-même et chacun des autres mobiles et pour chacun des autres mobiles les différences entre le trajet le séparant du premier mobile et passant par chacun des mobiles autres que lui-même et le trajet le séparant du premier mobile,
e) émission, entre tous les mobiles y compris le premier mobile, des distances ainsi déterminées, cette émission pouvant être réalisée sous la forme d'une information à grand ou faible débit.
   Avantageusement, le procédé comporte en outre l'étape suivante,
f) détermination par triangulation, à partir des distances élaborées et reçues par chacun des mobiles, de la localisation précise des différents mobiles, laquelle détermination est effectuée soit par chaque mobile, soit par un mobile déterminé, lequel retransmettra ensuite la localisation aux autres mobiles.

Avantageusement, l'attribution de l'émission à grand débit à un mobile autre que le premier mobile est demandée au travers de l'information à faible débit émise en réponse à l'information à grand débit transmise par ce premier mobile. Le procédé ainsi mis en oeuvre assure une mesure de distance discrète, confidentielle et protégée contre le brouillage pour tous les mobiles appartenant au système de transmission. De par la technique de l'étalement de spectre, cette mesure est effectuée avec une très grande précision et selon la fréquence de l'horloge système permet la localisation de mobiles rapides.

L'invention concerne aussi un dispositif dont chaque mobile, conformément à l'invention, comporte :
- un émetteur qui reçoit une information à grand débit à transmettre et engendre, par modulation et codage avec un code d'étalement, une information à grand débit codée,
- un récepteur qui reçoit cette information à grand débit codée et restitue, par démodulation et corrélation avec le code d'étalement, l'information à grand débit initiale,
- un répondeur qui reçoit une information à faible débit à transmettre et engendre, par modulation et codage avec le code d'étalement, une information à faible débit codée,
- un récepteur de localisation qui reçoit cette information à faible débit codée et restitue, par démodulation et corrélation avec le code d'étalement, l'information à faible débit initiale et qui élabore une information de distance en comparant le retard de phase du code d'étalement associé à l'information à faible débit reçue avec le code d'étalement codant l'information à grand débit.

De même, le récepteur de localisation détermine également par triangulation la localisation des différents mobiles à partir des différentes informations de distance élaborées ou reçues par chacun des mobiles à chaque phase d'une horloge système.

Selon un mode de réalisation, l'émetteur comporte un premier modulateur qui reçoit l'information à grand débit à transmettre et le code d'étalement et un deuxième modulateur qui engendre l'information à grand débit codée par modulation d'une porteuse radioélectrique générée par un premier oscillateur par l'information codée délivrée par le premier modulateur. Le récepteur comporte un troisième modulateur qui module une porteuse radioélectrique, générée par un second oscillateur, par le code d'étalement et un premier corrélateur qui compare le signal délivré par le troisième modulateur avec l'information à grand débit codée reçue et restitue après démodulation l'information à grand débit initiale. Le répondeur comporte un quatrième modulateur qui reçoit l'information à faible débit à transmettre et le code d'étalement et un cinquième modulateur qui engendre l'information à faible débit codée par modulation, d'une porteuse radioélectrique générée par un second oscillateur, par l'information codée délivrée par le quatrième modulateur. Le récepteur de localisation comporte un second corrélateur qui compare l'information à faible débit codée reçue avec le code d'étalement et restitue après démodulation l'information à faible débit initiale et un ensemble de mémorisation et de calcul qui détermine la localisation de chaque mobile depuis les informations de distance obtenues par la mesure des retards entre le code d'étalement codant l'information à grand débit et le code d'étalement associé à l'information à faible débit reçue.

Avantageusement, les modulateurs, les démodulateurs et les corrélateurs sont ou comportent des modulateurs ou démodulateurs du type à deux états de phase, par exemple 0-π.

Selon une caractéristique particulière, le démodulateur du récepteur de localisation autorise d'une part une démodulation des informations à faible débit des mobiles du système et d'autre part une démodulation des informations à faible débit des mobiles externes au système.

Avantageusement, le démodulateur du récepteur de localisation associe une démodulation à deux états de phase avec une démodulation de fréquence.

D'autres caractéristiques et avantages ressortiront mieux à la lecture de la description qui va suivre, faite à titre indicatif et non limitatif, en référence aux dessins annexés, sur lesquels :
- la figure 1 représente un synoptique général d'un système de transmission selon l'invention, et
- la figure 2 représente un synoptique d'un mobile du système de transmission selon l'invention.

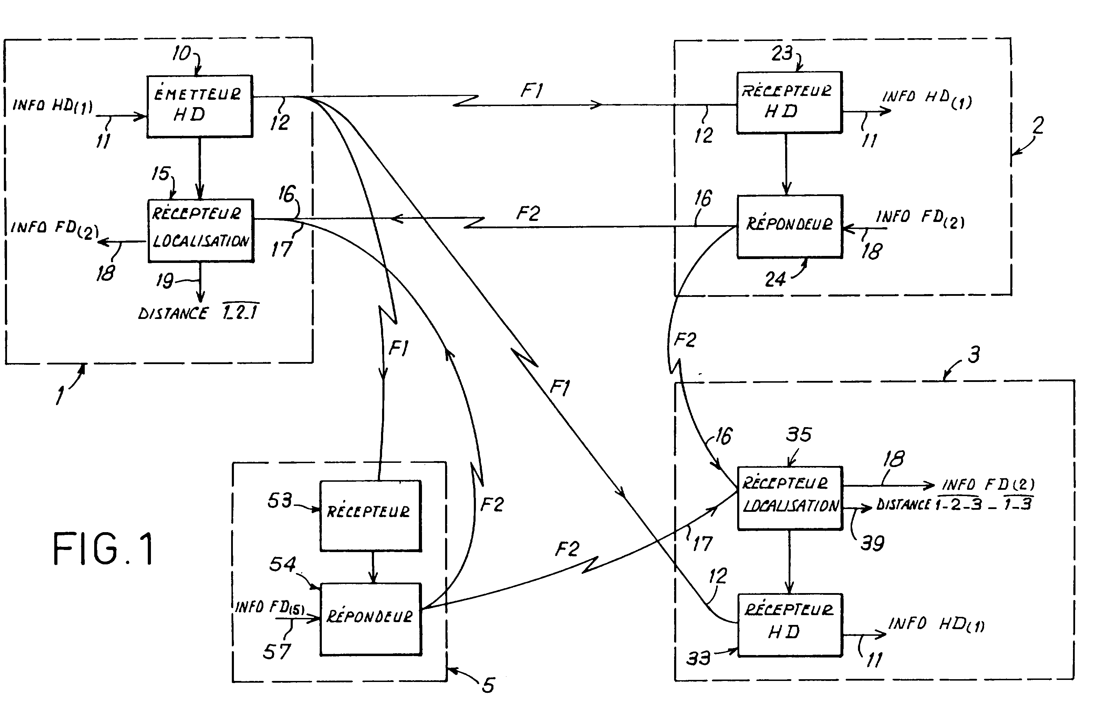

La figure 1 montre un schéma synoptique général d'un système de transmission selon l'invention. A titre d'exemple, celui-ci comporte trois mobiles 1, 2, 3, mais il est évident que ce nombre n'est pas limitatif et peut être autrement plus élevé. Un quatrième mobile 5 est également représenté pour figurer les mobiles n'appartenant pas au système de transmission, mais pouvant cependant être amenés à communiquer avec lui et à être localisés. Chaque mobile est constitué d'au moins quatre éléments, un émetteur, un récepteur, un répondeur et un récepteur de localisation, remplissant une fonction distincte, mais possédant toutefois des parties communes. Pour la clarté de la description de cette figure, ces quatre éléments seront représentés sans préciser leurs interactions et référencés indépendamment. De même, seuls seront représentés les éléments intervenant dans une phase de fonctionnement donnée, par exemple l'émetteur et le récepteur de localisation pour le mobile 1 lorsque celui-ci est en phase d'émission.

Dans l'exemple de la figure 1, le mobile 1 est supposé émettre à grand débit (ou haut débit) et selon le séquencement du système qui sera détaillé plus avant c'est au mobile 2 de répondre (en émettant à faible débit). Le mobile 3 est entièrement passif et le mobile 5 externe au système émet également en faible débit.

Les principes de transmission utilisés sont ceux dits à étalement de spectre par séquence directe qui d'une information initiale analogique ou numérique en bande de base délivre d'abord au moyen t'une porteuse d'étalement binaire, avantageusement un code pseudo-aléatoire, une information étalée, puis ensuite au moyen d'une porteuse radioélectrique de fréquence F, sinusoïdale ou non, fournit une information codée de largeur de bande rayonnée notablement plus élevée que celle de la bande de base.

Ainsi, le mobile 1 comporte notamment un émetteur 10 qui, à partir d'une information à grand débit 11, délivre à la fréquence F1 une information codée 12 à destination de tous les autres mobiles et un récepteur de localisation 15 qui reçoit à la fréquence F2 d'une part une information codée 16 en provenance du mobile 2 et d'autre part une ou plusieurs informations codées 17 en provenance des mobiles extérieurs au système te transmission et génère à la fois une information à faible débit 18 reconstituée et une information de localisation 19. Le mobile 2 comporte notamment un récepteur 23 qui reçoit l'information codée 12 du mobile 1 et génère l'information à grand débit 11 reconstituée et un répondeur 24 qui délivre à la fréquence F2 et pour les autres mobiles du système de transmission l'information codée 16 issue de l'information à faible débit 18. Le mobile 3 comporte notamment un récepteur 33 qui reçoit, comme pour le mobile 2, l'information codée 12 du mobile 1 et génère l'information à grand débit 11 reconstituée et un récepteur de localisation 35 qui reçoit à la fréquence F2 d'une part une information codée 16 en provenance du mobile 2 et d'autre part une ou plusieurs informations codées 17 en provenance de mobiles extérieurs au système de transmission et génère à la fois l'information à faible débit 18 reconstituée et une information de localisation 39. Le mobile 5 externe au système de transmission comporte notamment un récepteur 53 qui, comme tous les mobiles du système, reçoit à la fréquence F1 l'information codée 12 et un répondeur 54 qui, à partir d'une information à faible débit 58 qui lui est propre et de l'information codée 12 reçue, délivre à la fréquence F2 l'information codée 17 pour tous les mobiles.

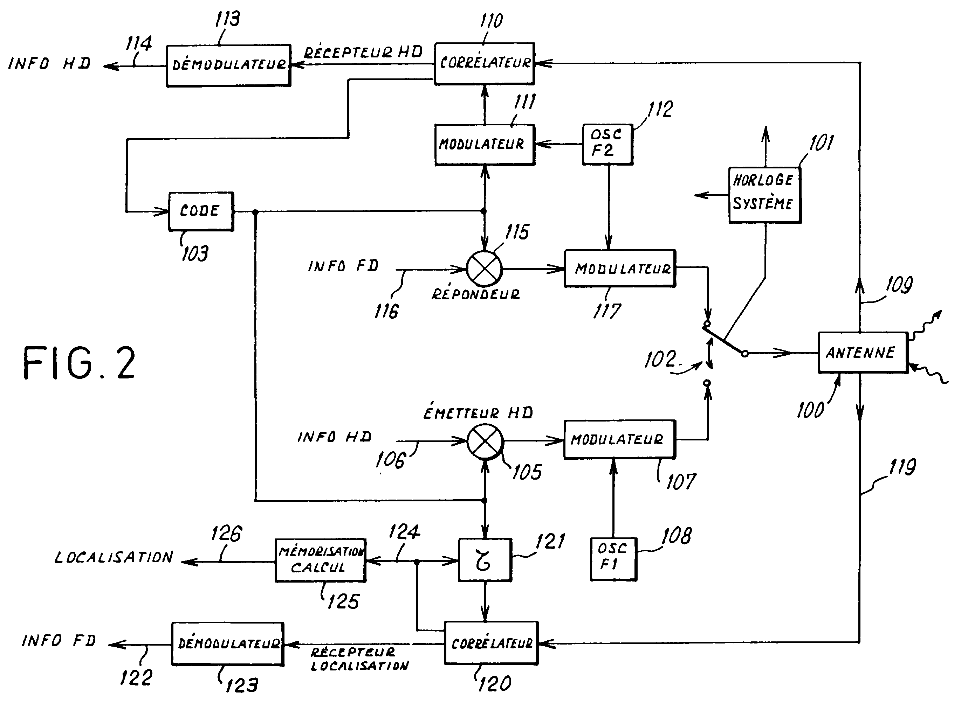

La figure 2 montre plus en détail au niveau d'un mobile quelconque du système de transmission, par exemple le mobile 1, les interactions existant entre les différents éléments le constituant ainsi que les parties communes à ces éléments : une antenne 100 qui assure à la fois la réception et l'émission des différentes informations, une horloge système 101, dont le cycle d'horloge comporte plusieurs phases, qui assure la gestion des communications en définissant le séquencement entre les moments d'émission ou de réception (par le basculement entre autres de l'interrupteur 102), un code d'étalement binaire unique 103, avantageusement pseudo-aléaoire, qui peut être aisément modifié et assure la confidentialité des communications comme la protection contre le brouillage.

Pour la clarification de la description, certains éléments non essentiels ont été volontairement omis, mais l'homme de l'art saura sans difficulté replacer ces éléments classiques que sont les amplificateurs, filtres ou oscillateurs FI. L'émetteur à grand débit comporte d'une part un premier modulateur ou multiplicateur 105 pouvant constituer en une simple porte ou-exclusif qui reçoit le signal à transmettre, une information à grand débit 106, et une porteuse à étalement binaire, le code d'étalement 103, et d'autre part un deuxième modulateur 107 qui reçoit l'information délivrée par ce premier modulateur et module une porteuse radioélectrique générée par un premier oscillateur 108 à la fréquence F1. Avantageusement, ces deux modulateurs 105 et 107 peuvent être du type modulation à deux états de phase (MP2), mais toute autre modulation de phase ou de fréquence pourrait aussi être utilisée. Le signal ainsi codé est émis via l'antenne 100. Le récepteur à grand débit comporte un premier corrélateur 110 qui réalise la démodulation de l'information à grand débit étalée et modulée à la fréquence F1 109 en comparant cette information reçue avec le code d'étalement 103 modulant dans le troisième modulateur 111 une autre porteuse radioélectrique générée par un second oscillateur 112 à la fréquence F2. La mesure du retard de phase entre les deux signaux en entrée du premier corrélateur 110 permet d'assurer la synchronisation du code d'étalement et d'obtenir ensuite, après passage dans un premier démodulateur 113, l'information à grand débit reconstituée 114. Avantageusement, le premier démodulateur 113 est du type à deux états de phase (MP2), mais toute autre modulation de phase ou de fréquence pourrait aussi être valablement utilisée. Le répondeur présente une configuration analogue à l'émetteur à grand débit avec d'une part un quatrième modulateur ou multiplicateur 115 pouvant également constituer en une simple porte ou-exclusif qui reçoit le signal à transmettre, une information à faible débit 116, et une porteuse à étalement binaire, le code d'étalement 103, et d'autre part un cinquième modulateur 117 qui reçoit l'information à faible débit ainsi étalée et module la porteuse radioélectrique générée par le second oscillateur 112 à fréquence F2. Comme pour l'émetteur à grand débit, les modulateurs utilisés sont avantageusement du type à deux états de phase sans être toutefois limités à cette seule modulation. Enfin, le récepteur de localisation comporte un second corrélateur 120 qui réalise la démodulation de l'information à faible débit étalée et modulée à la fréquence F2 119 en comparant cette information reçue avec le code d'étalement 103. La mesure et le contrôle 121 du retard de phase entre ces deux signaux en entrée de ce second corrélateur permettent tout en assurant la synchronisation de délivrer l'information à faible débit reconstituée 122 après passage dans un second démodulateur 123, mais aussi de fournir une information de distance 124 qui, mémorisée à chaque phase de l'horloge système, donnera après calculs de triangulation 125 des informations de localisation 126 relativement aux différents mobiles. Il est à noter que le second démodulateur 123 doit pouvoir assurer à la fois la démodulation des informations à faible débit en provenance des différents mobiles du système de transmission et la démodulation des informations à faible débit reçues des mobiles extérieurs. L'association d'une démodulation de fréquence avec une démodulation du type à deux états de phase permettra, par exemple, de recevoir ces deux types d'information.

Il est fait référence à nouveau à la figure 1. La gestion des communications entre les mobiles et notamment leur séquencement est le fait de l'horloge système (non représentée) qui suffisamment stable est considérée ne pas introduire d'erreur de synchronisation significative pendant les communications. L'horloge système est décomposée en cycles comprenant chacun autant de phases qu'il existe de mobiles appartenant au système de transmission. Pendant une phase donnée, seuls, certains éléments d'un mobile donné sont actifs, les autres étant hors fonctionnement.

Ainsi, dans l'exemple de la figure 1, l'horloge système comportera des cycles de trois phases, chacune de ces phases correspondant aux instants d'émission du répondeur d'un mobile donné. Dans l'hypothèse choisie, le mobile 1 émet à haut débit et cela pendant au moins un cycle complet, c'est-à-dire trois phases successives.

Pendant la première phase, le récepteur du mobile 1 est hors fonctionnement et les récepteurs 23, 33 des mobiles 2 et 3 sont actifs, ainsi qu'éventuellement celui 53 du mobile externe 5. De même, les répondeurs des mobiles 1 à 3 sont hors fonctionnement et seul le répondeur 54 du mobile 5 est actif. Enfin, les récepteurs de localisation des mobiles 2 et 3 sont hors fonctionnement et le récepteur de localisation 15 du mobile 1 est actif. L'information haut débit codée 12 émise par l'émetteur 10 du mobile 1 est reçue par les récepteurs 23, 33, 53 des autres mobiles qui, pour les mobiles appartenant au système, la démodulent et restituent l'informaticn haut débit 11 initiale, et pour le mobile externe 5 la reçoit simplement sans pouvoir la démoduler, ne connaissant pas le code d'étalement du mobile émetteur, et la recopie en la transposant sur la fréquence F2 et en y ajoutant une information faible débit qui lui est propre pour enfin l'émettre 17 à destination des autres mobiles. Le récepteur de localisation 15 du mobile 1, alors seul actif, peut ensuite en effectuant la corrélation de l'information codée 17 reçue de ce mobile inconnu avec son code d'émission évaluer simplement par comparaison du retard de phase des codes d'étalement émis et reçus la distance séparant les mobiles 1 et 5.

Pendant la seconde phase, phase que représente expressement la figure 1, le récepteur du mobile 1 est toujours hors fonctionnement et les récepteurs des autres mobiles toujours actifs. De même, les répondeurs des mobiles 1 et 3 sont hors fonctionnement mais le répondeur 24 du mobile 2 est alors actif comme éventuellement celui 54 du mobile externe 5. Enfin, seul le récepteur de localisation du mobile 2 est hors fonctionnement, les récepteurs des mobiles 1 et 3 étant actifs. L'information haut débit codée 12 est toujours reçue par les récepteurs des différents mobiles qui la démodulent ou la réémettent selon qu'ils appartiennent ou non au système de transmission. Le répondeur 24 du mobile 2, alors seul répondeur actif du système, réémet le code d'étalement en y ajoutant une information faible débit 18, information de service pouvant, par exemple, gêrer la liaison haut débit ou répartir des informations propres au système comme par exemple les demandes d'émission en haut débit. Cette émission 16 s'effectue vers tous les autres mobiles du système et notamment vers le mobile 1 dont le récepteur de localisation 15 en restitue le contenu 18 par démodulation et par comparaison de la phase du code d'étalement évalue la distance aller-retour séparant ces mobiles 1 et 2. Le récepteur de localisation 35 du mobile 3 reçoit également l'information codée 16 et comme le mobile 1 généré l'information faible débit 18 et par comparaison du retard de phase du code d'étalement détermine une distance qui correspond à la différence entre la distance mobile 1 - mobile 2 - mobile 3 et la distance mobile 1 - mobile 3.

Pendant la troisième et dernière phase, comme pendant les deux précédentes, les différents récepteurs sont dans le même état. Le répondeur du mobile 3 est maintenant actif comme celui 54 du mobile 5 et les répondeurs des mobiles 1 et 2 sont hors fonctionnement. Enfin, le récepteur de localisation du mobile 3 est maintenant hors fonctionnement, ceux des mobiles 1 et 2 étant actifs. L'information haut débit codée 12 est toujours émise et les différents récepteurs toujours actifs pour la démoduler et/ou la réémettre. Le répondeur du mobile 3, alors seul actif dans le système, réémet vers les autres mobiles le code d'étalement en y ajoutant une information faible débit porteuse d'information de service par exemple. Au niveau du mobile 1, le récepteur de localisation 15 restitue cette information et par comparaison du retard de phase du code d'étalement détermine la distance aller-retour séparant ces mobiles 1 et 3. Le récepteur de localisation du mobile 2 qui reçoit également l'information codée en provenance du mobile 2 en retire l'information faible débit et par comparaison du retard de phase de la séquence d'étalement détermine une distance qui correspond à la différence entre une distance somme de la distance entre le mobile 1 et le mobile 3 et de la distance entre le mobile 3 et le mobile 2 et une distance entre le mobile 1 et le mobile 2.

La succession de ces trois phases achève un cycle complet de l'horloge système et un nouveau cycle peut alors commencer.

L'exemple donné n'est bien évidemment pas limitatif et le cycle décrit se généralise parfaitement pour un nombre plus important de mobiles. Ainsi, il peut être observé qu'au niveau du premier mobile émetteur l'émetteur haut débit est actif pendant au moins un cycle complet, le répondeur et le récepteur sont hors fonctionnement et le récepteur de localisation mesure à chaque phase de ce cycle la distance qui le sépare d'un autre mobile. Au niveau de chacun des autres mobiles du système de transmission, ce récepteur est actif pendant tout le cycle alors que le répondeur ne l'est que pendant la phase de ce cycle qui lui est attribué. Pendant les autres phases il est hors fonctionnement. Le récepteur de localisation à l'inverse est hors fonctionnement pendant cette phase ainsi que pendant la première phase et actif pendant toutes les autres. Plus généralement, les différentes étapes du processus de transmission des informations et de localisation des différents mobiles peuvent s'établir comme suit :
a) émission, d'un premier mobile vers les autres mobiles, d'un signal utile sous la forme d'une information à grand débit modulée et codée par un code d'étalement,
b) réception, par les mobiles autres que le premier mobile, de l'information à grand débit codée ainsi transmise et
   restitution, par corrélation avec le code d'étalement et démodulation, de l'information à grand débit initiale,
c) en réponse à cette émission du premier mobile, émission au rythme des phases successives d'une horloge système, par chacun des mobiles autres que le premier mobile, d'un signal de service sous la forme d'une information à faible débit modulée et codée par le code d'étalement,
d) réception, par les mobiles autres que le mobile émetteur de l'étape c, de l'information à faible débit codée ainsi transmise et d'une part restitution, par corrélation avec le code d'étalement et démodulation, de l'information à faible débit initiale et d'autre part détermination des distances séparant les différents mobiles par comparaison du retard de phase existant entre le code d'étalement de l'information à faible débit reçue et le code d'étalement émis, lesquelles distances représentant, pour le premier mobile, les trajets aller-retour entre lui-même et chacun des autres mobiles et pour chacun des autres mobiles les différences entre le trajet le séparant du premier mobile et passant par chacun des mobiles autres que lui-même et le trajet le séparant du premier mobile,
e) émission, entre tous les mobiles y compris le premier mobile, des distances ainsi déterminées, cette émission pouvant être réalisée sous la forme d'une information à grand ou faible débit.

Comme il a été signalé, les liaisons à faible débit des différents mobiles du système servent notamment à véhiculer des informations de service, toutefois celles-ci peuvent aussi avantageusement émettre les différentes distances qui ont été mesurées par chaque mobile à chaque cycle. Ainsi, chaque mobile peut disposer de toutes les mesures effectuées et calculer alors les distances point-à-point ce qui, lorsque le nombre de mobiles est supérieur à trois, permet de localiser par triangulation tous ces mobiles en trois dimensions. Il peut être noté que ces différentes informations peuvent être aussi véhiculées par la liaison haut débit qui émet aussi un numéro d'identification pour chaque mobile et que les calculs de distances peuvent n'être réalisés qu'au niveau d'un seul mobile qui ensuite en retransmettra les résultats.

L'ensemble constitue un système parfaitement autonome ne nécessitant d'autres liaisons que celles existantes et décrites précédemment et reconfigurable à tout instant, l'attribution à l'un ou à l'autre de l'émission à haut débit pouvant être demandée par chaque mobile au moyen de la liaison faible débit. Le système est particulièrement bien adapté aux liaisons entre aéronefs, mais cette utilisation n'est pas limitative et il est parfaitement possible de fixer un ou plusieurs mobiles qui constitueront alors une référence de position pour l'ensemble du système.

## Revendications

1. Procédé de transmission d'information et de localisation de mobiles, selon lequel les liaisons entre les mobiles sont réalisées selon la technique dite à étalement de spectre par séquence directe, caractérisé en ce qu'il comporte les étapes suivantes :
a) émission, d'un premier mobile vers les autres mobiles, d'un signal utile sous la forme d'une information à grand débit modulée et codée par un code d'étalement,
b) réception, par les mobiles autres que le premier mobile, de l'information à grand débit codée ainsi transmise et restitution, par corrélation avec le code d'étalement et démodulation, de l'information à grand débit initiale,
c) en réponse à cette émission du premier mobile, émission au rythme des phases successives d'une horloge système, par chacun des mobiles autre que le premier mobile, d'un signal de service sous la forme d'une information à faible débit modulée et codée par le code d'étalement,
d) réception, par les mobiles autres que le mobile émetteur selon l'étape c, de l'information à faible débit codée ainsi transmise et d'une part restitution, par corrélation avec le code d'étalement et démodulation, de l'information à faible débit initiale et d'autre part détermination des distances séparant les différents mobiles par comparaison du retard de phase existant entre le code d'étalement de l'information à faible débit reçue et le code d'étalement émis, lesquelles distances représentant, pour le premier mobile, les trajets aller-retour entre lui-même et chacun des autres mobiles et pour chacun des autres mobiles les différences entre le trajet le séparant du premier mobile et passant par chacun des mobiles autres que lui-même et le trajet le séparant du premier mobile,
e) émission, entre tous les mobiles y compris le premier mobile, des distances ainsi déterminées, cette émission pouvant être réalisée sous la forme d'une information à grand ou faible débit.

2. Procédé selon la revendication 1, caractérisé en ce qu'il comporte en outre l'étape suivante :
f) détermination par triangulation, à partir des distances élaborées et reçues par chacun des mobiles, de la localisation précise des différents mobiles, laquelle détermination est effectuée soit par chaque mobile, soit par un mobile déterminé, lequel retransmettra ensuite la localisation aux autres mobiles.

3. Procédé selon la revendication 1 ou la revendication 2, caractérisé en ce que l'attribution de l'émission à grand débit à un mobile autre que le premier mobile est demandée au travers de l'information à faible débit émise en réponse à l'information à grand débit transmise par ce premier mobile.

4. Dispositif pour la transmission d'information et la localisation de mobiles dans lequel les liaisons entre les mobiles sont réalisées selon la technique dite à étalement de spectre par séquence directe, caractérisé en ce que chaque mobile (1, 2, 3) comporte :
- un émetteur (10) qui reçoit une informaticn à grand débit (11) à transmettre et engendre, par modulation et codage avec un code d'étalement, une information à grand débit codée (12),
- un récepteur (23, 33) qui reçoit cette information à grand débit codée (12) et restitue, par démodulation et corrélation avec le code d'étalement, l'information à grand débit initiale (11),
- un répondeur (24) qui reçoit une information à faible débit (18) à transmettre et engendre, par modulation et codage avec le code d'étalement, une information à faible débit codée (16,17),
- un récepteur de localisation (15, 35) qui reçoit cette informaticn à faible débit codée (16,17) et restitue, par démodulation et corrélation avec le code d'étalement, l'information à faible débit initiale (18) et qui élabore une information de distance (19, 39) en comparant le retard de phase du code d'étalement associé à l'information à faible débit codée (16,17) reçue avec le code d'étalement codant l'information à grand débit (11).

5. Dispositif selon la revendication 4, caractérisé en ce que le récepteur de localisation (15, 35) détermine également par triangulation la localisation des différents mobiles (1, 2, 3) à partir des différentes informations de distance (19, 39) élaborées ou reçues par chacun des mobiles à chaque phase d'une horloge système (101).

6. Dispositif selon la revendication 4 ou la revendication 5, caractérisé en ce que l'émetteur (10) comporte un premier modulateur (105) qui reçoit l'information à grand débit (11, 106) à transmettre et le code d'étalement (103) et un deuxième modulateur (107) qui engendre l'information à grand débit codée (12) par modulation d'une porteuse radioélectrique générée par un premier oscillateur (108), par l'information codée délivrée par le premier modulateur (105).

7. Dispositif selon les revendications 4, 5 ou 6, caractérisé en ce que le récepteur (23, 33) comporte un troisième modulateur (111) qui module une porteuse radioélectrique, générée par un second oscillateur (112), par le code d'étalement (103) et un premier corrélateur (110) qui compare le signal délivré par ce troisième modulateur (111) avec l'information à grand débit codée (12, 109) reçue et restitue après démodulation (113) l'information à grand débit initiale (11, 114).

8. Dispositif selon les revendications 4, 5, 6 ou 7, caractérisé en ce que le répondeur (24) comporte un quatrième modulateur (115) qui reçoit l'information à faible débit (18, 116) à transmettre et le code d'étalement (103) et un cinquième modulateur (117) qui engendre l'information à faible débit codée (16) par modulation d'une porteuse radioélectrique générée par un second oscillateur (112), par l'information codée délivrée par le quatrième modulateur (115).

9. Dispositif selon les revendications 4, 5, 6, 7 ou 8, caractérisé en ce que le récepteur de localisation (15, 35) comporte un second corrélateur (120) qui compare l'information à faible débit codée (16, 119) reçue avec le code d'étalement (103) et restitue après démodulation (123) l'information à faible débit initiale (18, 122) et un ensemble de mémorisation et de calcul (125) qui détermine la localisation (126) de chaque mobile depuis les informations de distance (124) obtenues par la mesure des retards (121) entre le code d'étalement (103) codant l'information à grand débit et le code d'étalement associé à l'information à faible débit (16, 119) reçue.

10. Dispositif selon l'une quelconque des revendications 4 à 9, caractérisé en ce que les modulateurs (105, 107, 111, 115, 117), les démodulateurs (113, 123) et les corrélateurs (110, 120) sont ou comportent des modulateurs ou démodulateurs du type à deux états de phase, par exemple 0-π.

11. Dispositif selon l'une quelconque des revendications 4 à 10, caractérisé en ce que le démodulateur (123) du récepteur de localisation (15, 35) autorise d'une part une démodulation des informations à faible débit (16) des mobiles (1, 2, 3) du système et d'autre part une démodulation des informations à faible débit (17) des mobiles (5) externes au système.

12. Dispositif selon la revendication 11, caractérisé en ce que le démodulateur (123) du récepteur de localisation associe une démodulation à deux états de phase avec une démodulation de fréquence.

## Patentansprüche

1. Verfahren zur Informationsübertragung und zur Lokalisierung beweglicher Objekte, bei dem die Verbindungen zwischen den beweglichen Objekten nach der sogenannten Bandspreiztechnik mit direkter Sequenz (direct sequence) hergestellt werden,
dadurch gekennzeichnet,
daß es die folgenden Schritte umfaßt:
a) Sendung eines Nutzsignals in der Form einer Information mit hoher Übertragungsrate, die moduliert und mit einem Dehnungskode (Bandspreiztechnik) kodiert ist, von einem ersten beweglichen Objekt zu den anderen beweglichen Objekten,
b) Empfang der auf diese Weise übertragenen kodierten Information mit hoher Übertragungsrate durch die von dem ersten beweglichen Objekt abgegrenzten anderen beweglichen Objekte sowie Wiederherstellung der ursprünglichen Information mit hoher Übertragungsrate durch Korrelation mit dem Dehnungskode und Demodulation,
c) Sendung eines Service-Signals in der Form einer Information mit niedriger Übertragungsrate, die moduliert und mit dem Dehnungskode kodiert ist, im Takt der aufeinanderfolgenden Phasen eines Zeitgebersystems von jedem anderen der beweglichen Objekte als dem ersten beweglichen Objekt in Reaktion auf diese Sendung des ersten beweglichen Objekts,
d) Empfang der auf diese Weise übertragenen kodierten Information mit niedriger Übertragungsrate durch die anderen beweglichen Objekte als dem beweglichen Sendeobjekt sowie einerseits Wiederherstellung der ursprünglichen Information mit niedriger Übertragungsrate durch Korrelation mit dem Dehnungskode und Demodulation, und andererseits Bestimmung der Distanzen zwischen den einzelnen beweglichen Objekten durch Vergleichen der Phasenverzögerung zwischen dem mit der empfangenen Information mit niedriger Übertragungsrate verbundenen Dehnungskode und dem gesendeten Dehnungskode, wobei diese Distanzen für das erste bewegliche Objekt die Hin- und Rückstrecken zwischen diesem und jedem der anderen beweglichen Objekte darstellen und für die anderen beweglichen Objekte die Differenzen zwischen der Strecke, die dieses von dem ersten beweglichen Objekt trennt und über jedes andere der beweglichen Objekte als über es selbst verläuft, und der Strecke, die dieses von dem ersten beweglichen Objekt trennt, darstellen,
e) Sendung der auf diese Weise bestimmten Distanzen zwischen allen beweglichen Objekten einschließlich des ersten beweglichen Objekts, wobei diese Sendung in der Form einer Information mit hoher oder niedriger Übertragungsrate erfolgen kann.

2. Verfahren nach Anspruch 1, dadurch gekennzeichnet, daß es ferner den folgenden Schritt enthält:
f) Durchführung der präzisen Lokalisierung der einzelnen beweglichen Objekte durch Triangulation aus den Distanzen, die durch jedes der beweglichen Objekte erstellt und empfangen werden, wobei diese Bestimmung entweder durch jedes bewegliche Objekt oder durch ein bestimmtes bewegliches Objekt erfolgt, welches sodann die Lokalisierung zu den anderen beweglichen Objekten weiterüberträgt.

3. Verfahren nach Anspruch 1 oder Anspruch 2, dadurch gekennzeichnet, daß die Zuordnung der Sendung mit hoher Übertragungsrate zu einem anderen beweglichen Objekt als dem ersten beweglichen Objekt über die Information mit niedriger Übertragungsrate angefordert wird, die in Reaktion auf die durch dieses erste bewegliche Objekt übertragene Information mit hoher Übertragungsrate gesendet wird.

4. Vorrichtung zur Informationsübertragung und zur Lokalisierung beweglicher Objekte, bei der die Verbindungen zwischen den beweglichen Objekten nach der sogenannten Bandspreiztechnik mit direkter Sequenz (direct sequence) hergestellt werden, dadurch gekennzeichnet, daß jedes bewegliche Objekt (1, 2, 3) aufweist:
- einen Sender (10), der eine zu übertragende Information mit hoher Übertragungsrate (11) empfängt und durch Modulation und Kodierung mit einem Dehnungskode eine kodierte Information mit hoher Übertragungsrate (12) erzeugt,
- einen Empfänger (23, 33), der diese kodierte Information mit hoher Übertragungsrate (12) empfängt und durch Demodulation und Korrelation mit dem Dehnungskode die ursprüngliche Information mit hoher Übertragungsrate (11) wieder herstellt,
- einen Antwortsender (24), der eine zu übertragende Information mit niedriger Übertragungsrate (18) empfängt und durch Modulation und Kodierung mit dem Dehnungskode eine kodierte Information mit niedriger Übertragungsrate (16, 17) erzeugt,
- einen Lokalisierungsempfänger (15, 35), der diese kodierte Information mit niedriger Übertragungsrate (16, 17) empfängt und durch Demodulation und Korrelation mit dem Dehnungskode die ursprüngliche Information mit niedriger Übertragungsrate (18) wieder herstellt und der durch Vergleich der Phasenverzögerung des Dehnungskodes, der mit der empfangenen Information mit niedriger Übertragungsrate (16, 17) verbunden ist, mit dem Dehnungskode, der die Information mit hoher Übertragungsrate (11) kodiert, eine Distanzinformation (19, 39) erstellt.

5. Vorrichtung nach Anspruch 4, dadurch gekennzeichnet, daß der Lokalisierungsempfänger (15, 35) aus den einzelnen Distanzinformationen (19, 39), die bei jeder Phase eines Systemzeitgebers (101) von jedem der beweglichen Objekte erstellt oder empfangen werden, durch Triangulation auch die Lokalisierung der einzelnen beweglichen Objekte (1, 2, 3) durchführt.

6. Vorrichtung nach Anspruch 4 oder Anspruch 5, dadurch gekennzeichnet, daß der Sender (10) einen ersten Modulator (105) aufweist, der die zu übertragende Information mit hoher Übertragungsrate (11, 106) und den Dehnungskode (103) empfängt, sowie einen zweiten Modulator (107), der durch Modulation einer Hochfrequenz-Trägerwelle, die von einem ersten Oszillator (108) mittels der von dem ersten Modulator (105) abgegebenen kodierten Information erzeugt wird, die kodierte Information mit hoher Übertragungsrate (12) erzeugt.

7. Vorrichtung nach den Ansprüchen 4, 5 oder 6, dadurch gekennzeichnet, daß der Empfänger (23, 33) einen dritten Modulator (111) enthält, der eine von einem zweiten Oszillator (112) erzeugte Hochfrequenz-Trägerwelle mit dem Dehnungskode (103) moduliert, sowie einen ersten Korrelator (110), der das von diesem dritten Modulator (111) abgegebene Signal mit der empfangenen kodierten Information mit hoher Übertragungsrate (12, 109) vergleicht und nach Demodulation (113) die ursprüngliche Information mit hoher Übertragungsrate (11, 114) wieder herstellt.

8. Vorrichtung nach den Ansprüchen 4, 5, 6 oder 7, dadurch gekennzeichnet, daß der Antwortsender (24) einen vierten Modulator (115) aufweist, der die zu übertragende Information mit niedriger Übertragungsrate (18, 116) und den Dehnungskode (103) empfängt, sowie einen fünften Modulator (117), der durch Modulation einer Hochfrequenz-Trägerwelle, die von einem zweiten Oszillator (112) mittels der von dem vierten Modulator (115) abgegebenen kodierten Information erzeugt wird, die kodierte Information mit niedriger Übertragungsrate (16) erzeugt.

9. Vorrichtung nach den Ansprüchen 4, 5, 6, 7 oder 8, dadurch gekennzeichnet, daß der Lokalisierungsempfänger (15, 35) einen zweiten Korrelator (120) enthält, der die empfangene kodierte Information mit niedriger Übertragungsrate (16, 119) mit dem Dehnungskode (103) vergleicht und nach Demodulation (123) die ursprüngliche Information mit niedriger Übertragungsrate (18, 122) wieder herstellt, sowie eine Speicher- und Recheneinheit (125) enthält, die die Lokalisierung (126) jedes beweglichen Objekts aus den Distanzinformationen (124) durchführt, die durch das Messen der Verzögerungen (121) zwischen dem Dehnungskode (103), der die Information mit hoher Übertragungsrate kodiert, und dem Dehnungskode, der mit der empfangenen Information mit niedriger Übertragungsrate (16, 119) verbunden ist, erzielt wird.

10. Vorrichtung nach einem der Ansprüche 4 bis 9, dadurch gekennzeichnet, daß die Modulatoren (105, 107, 111, 115, 117), die Demodulatoren (113, 123) und die Korrelatoren (110, 120) Modulatoren oder Demodulatoren mit zwei Phasenzuständen sind oder aufweisen, z. B. 0-π.

11. Vorrichtung nach einem der Ansprüche 4 bis 10, dadurch gekennzeichnet, daß der Demodulator (123) des Lokalisierungsempfängers (15, 35) einerseits eine Demodulation der Informationen mit niedriger Übertragungsrate (16) der beweglichen Objekte (1, 2, 3) des Systems und andererseits eine Demodulation der Informationen mit niedriger Übertragungsrate (17) der systemexternen beweglichen Objekte (5) ermöglicht.

12. Vorrichtung nach Anspruch 11, dadurch gekennzeichnet, daß der Demodulator (123) des Lokalisierungsempfängers eine Demodulation mit zwei Phasenzuständen mit einer Frequenz-Demodulation verbindet.

## Claims

1. Method for transmitting information and for locating mobiles, according to which the links between the mobiles are produced according to the so-called direct sequence spread spectrum technique, characterized in that it includes the following steps:
a) transmission, from a first mobile to the other mobiles, of a useful signal in the form of modulated high-speed information coded by a spreading code,
b) reception, by the mobiles other than the first mobile, of the coded high-speed information thus transmitted and restoration, by correlation with the spreading code and demodulation, of the initial high-speed information,
c) in response to this transmission from the first mobile, transmission in tempo with the successive phases of a system clock, by each of the mobiles other than the first mobile, of a service signal in the form of modulated low-speed information coded by the spreading code,
d) reception, by the mobiles other than the transmitter mobile according to step c, of the coded low-speed information thus transmitted and on the one hand restoration, by correlation with the spreading code and demodulation, of the initial low-speed information and on the other hand determination of the distances separating the various mobiles by comparing the phase delay existing between the spreading code for the received low-speed information and the spreading code transmitted, which distances represent, for the first mobile, the round-trip paths between itself and each of the other mobiles and for each of the other mobiles the differences between the path separating it from the first mobile and passing through each of the mobiles other than itself and the path separating it from the first mobile,
e) transmission, between all the mobiles, including the first mobile, of the distances thus determined, it being possible for this transmission to be carried out in the form of high- or low-speed information.

2. Method according to Claim 1, characterized in that it furthermore includes the following step:
f) determination by triangulation, on the basis of the distances calculated and received by each of the mobiles, of the accurate location of the various mobiles, which determination is performed either by each mobile, or by a specified mobile, which will subsequently retransmit the location to the other mobiles.

3. Method according to Claim 1 or Claim 2, characterized in that the allocating of the high-speed transmission to a mobile other than the first mobile is requested via the low-speed information transmitted in response to the high-speed information transmitted by this first mobile.

4. Apparatus for transmitting information and locating mobiles, in which the links between the mobiles are produced according to the so-called direct sequence spread spectrum technique, characterized in that each mobile (1, 2, 3) includes:
- a transmitter (10) which receives high-speed information (11) to be transmitted and formulates, by modulation and coding with a spreading code, coded high-speed information (12),
- a receiver (23, 33) which receives this coded high-speed information (12) and restores, by demodulation and correlation with the spreading code, the initial high-speed information (11),
- a responder (24) which receives low-speed information (18) to be transmitted and formulates, by modulation and coding with the spreading code, coded low-speed information (16, 17),
- a location receiver (15, 35) which receives this coded low-speed information (16, 17) and restores, by demodulation and correlation with the spreading code, the initial low-speed information (18) and which calculates distance information (19, 39) by comparing the phase delay of the spreading code associated with the coded low-speed information (16, 17) received with the spreading code coding the high-speed information (11).

5. Apparatus according to Claim 4, characterized in that the location receiver (15, 35) also determines, by triangulation, the location of the various mobiles (1, 2, 3) on the basis of the various distance information (19, 39) calculated or received by each of the mobiles in each phase of a system clock (101).

6. Apparatus according to Claim 4 or Claim 5, characterized in that the transmitter (10) includes a first modulator (105) which receives the high-speed information (11, 106) to be transmitted and the spreading code (103) and a second modulator (107) which formulates the coded high-speed information (12) by modulating a radio carrier generated by a first oscillator (108), via the coded information delivered by the first modulator (105).

7. Apparatus according to Claims 4, 5 or 6, characterized in that the receiver (23, 33) includes a third modulator (111) which modulates a radio carrier, generated by a second oscillator (112), via the spreading code (103) and a first correlator (110) which compares the signal delivered by this third modulator (111) with the coded high-speed information (12, 109) received and restores after demodulation (113) the initial high-speed information (11, 114).

8. Apparatus according to Claims 4, 5, 6 or 7, characterized in that the responder (24) includes a fourth modulator (115) which receives the low-speed information (18, 116) to be transmitted and the spreading code (103) and a fifth modulator (117) which formulates the coded low-speed information (16) by modulating a radio carrier generated by a second oscillator (112), via the coded information delivered by the fourth modulator (115).

9. Apparatus according to Claims 4, 5, 6, 7 or 8, characterized in that the location receiver (15, 35) includes a second correlator (120) which compares the coded low-speed information (16, 119) received with the spreading code (103) and restores after demodulation (123) the initial low-speed information (18, 122) and a storage and computing assembly (125) which determines the location (126) of each mobile from the distance information (124) obtained by measuring the delays (121) between the spreading code (103) coding the high-speed information and the spreading code associated with the low-speed information (16, 119) received.

10. Apparatus according to any one of Claims 4 to 9, characterized in that the modulators (105, 107, 111, 115, 117), the demodulators (113, 123) and the correlators (110, 120) are or include modulators or demodulators of the type with two phase-states, for example 0-π.

11. Device according to any one of Claims 4 to 10, characterized in that the demodulator (123) of the location receiver (15, 35) permits on the one hand demodulation of the low-speed information (16) from the mobiles (1, 2, 3) of the system and on the other hand demodulation of the low-speed information (17) from the mobiles (5) external to the system.

12. Apparatus according to Claim 11, characterized in that the demodulator (123) of the location receiver associates a two phase-state demodulation with a frequency demodulation.
